(19) Europäisches Patentamt
European Patent Office
Office européen des brevets

(11) **EP 1 134 142 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.10.2009 Patentblatt 2009/42**

(51) Int Cl.:
*B60L 15/20* (2006.01)   *B61L 15/00* (2006.01)

(45) Hinweis auf die Patenterteilung:
**03.08.2005 Patentblatt 2005/31**

(21) Anmeldenummer: **01106517.4**

(22) Anmeldetag: **15.03.2001**

(54) **Verfahren und Vorrichtung zur Regelung der Geschwindigkeit eines Schienenfahrzeugs**

Rail vehicle speed control method and device

Procédé et dispositif de contrôle de vitesse d'un véhicule ferroviaire

(84) Benannte Vertragsstaaten:
**AT BE CH CY DE DK ES FI FR GB GR IE IT LI LU MC NL PT SE TR**

(30) Priorität: **16.03.2000 DE 10012928**

(43) Veröffentlichungstag der Anmeldung:
**19.09.2001 Patentblatt 2001/38**

(73) Patentinhaber: **Bombardier Transportation GmbH 13627 Berlin (DE)**

(72) Erfinder: **Brügger, Roland 5417 Untersiggenthal (CH)**

(74) Vertreter: **Thielmann, Andreas COHAUSZ & FLORACK Patent- und Rechtsanwälte Postfach 10 18 30 40009 Düsseldorf (DE)**

(56) Entgegenhaltungen:
DD-A- 144 659          DE-C- 19 535 122

- **PATENT ABSTRACTS OF JAPAN vol. 010, no. 290 (P-503), 2. Oktober 1986 (1986-10-02) & JP 61 109104 A (SHIMADZU CORP), 27. Mai 1986 (1986-05-27)**
- **HANS HACKSTEIN: 'Automatische Fahr- und Bremssteuerung und Automation im Zuge' EISENBAHNINGENIEUR 21 Bd. 12, 1970 - 1970, Seiten 371 - 374, XP009100967**
- **ALFRED ASSMUS: 'Fahr- und Bremssteuerung der Lokomotive E03' SIEMENS-ZEITSCHRIFT Bd. 6, Juni 1965 - Juni 1965, Seiten 595 - 600, XP009100980**

EP 1 134 142 B2

**Beschreibung**

**Technisches Gebiet**

Die Erfindung bezieht sich auf das Gebiet der Regelungstechnik. Sie geht aus von einem Verfahren und einer Vorrichtung zur Regelung der Geschwindigkeit eines Schienenfahrzeugs gemäss dem Oberbegriff der unabhängigen Ansprüche.

**Stand der Technik**

Bei heutigen Schienenfahrzeugen ist es zum einen erforderlich, ein möglichst schnelles und zugleich komfortables Anfahren zu ermöglichen. Zum anderen ist es für Schienenfahrzeuge, insbesondere für Lokomotiven der unteren, mittleren und oberen Leistungsklasse, unerlässlich, dass die vorgewählte Sollgeschwindigkeit, die nach dem Anfahren erreicht ist, auch, unabhängig von der Streckenneigung und der Streckenführung, aufrechtzuerhalten. Weiterhin muss ein Schienenfahrzeug bei einer eingeleiteten Bremsung bis zum Stillstand an einem genauen Halteort anhalten können.
Um die vorstehend genannten Anforderungen an ein Schienenfahrzeug zu erfüllen, werden Geschwindigkeitsregeleinrichtungen eingesetzt. In "Elektronische Steuerungen für Thyristor-Triebfahrzeuge der SNCF, Brown Boveri Mitt. 3-76" ist beispielhaft eine solche Geschwindigkeitsregeleinrichtung beschrieben, die einen Proportional-Integral-Differential-Regelkreis (PID-Regelkreis) umfasst. Aus einem vorgewählten Geschwindigkeitssollwert und einem Geschwindigkeitsistwert wird dabei ein Differenzgeschwindigkeitswert gebildet, der durch einen Begrenzer in einem vorgegebenen Bereich begrenzt wird. Aus dem begrenzten Differenzgeschwindigkeitswert wird anschliessend in einem Differenzierer das Differential des begrenzten Differenzgeschwindigkeitswerts gebildet. Aus dem Differential des begrenzten Differenzgeschwindigkeitswerts, dem begrenzten Differenzgeschwindigkeitswert selbst und einem Fahrmotorstromvorgabewert wird anschliessend in einer Rechnereinheit ein Fahrmotorstromreferenzwert gebildet, dem der Fahrstrommotoristwert folgt.
Problematisch bei einer deratigen Geschwindigkeitsregeleinrichtung ist jedoch, dass durch den proportionalen Anteil des PID-Regelkreises der Geschwindigkeitsregeleinrichtung dieser Anteil extrem stark auf den Differenzgeschwindigkeitswert und somit auf die Stellgrösse, d.h. auf den Fahrmotorstromreferenzwert einwirkt, wodurch die Geschwindigkeitsregeleinrichtung instabiles Verhalten aufweisen kann. Zudem werden verschiedene Fahrzeugmassen, wie sie gängigerweise in vollen oder teilweise besetzten Personenzügen oder bei einer wechselnden Anzahl Waggons bei einem Personen- oder Güterzug auftreten, in der vorstehend genannten Geschwindigkeitsregeleinrichtung nicht berücksichtigt. Dadurch kann es jedoch zu einer zusätzlichen Instabilität der Geschwindigkeitsregeleinrichtung kommen, wodurch ein erwünschtes optimales Ausregeln des Differenzgeschwindigkeitswertes zu Null zeitaufwendig wird oder gar ganz unterbleibt.
Aus der Patentschrift DD 144 659 ist ebenfalls eine Geschwindigkeitsregeleinrichtung für Schienentriebfahrzeuge bekannt.

**Darstellung der Erfindung**

Aufgabe der Erfindung ist es deshalb, ein Verfahren zur Regelung der Geschwindigkeit eines Schienenfahrzeugs anzugeben, welches die Istgeschwindigkeit des Schienenfahrzeugs auf eine vorgebbare Sollgeschwindigkeit unter Berücksichtigung sich ändernder Fahrzeugmassen möglichst schnell und stabil ausregelt, sowie eine Vorrichtung anzugeben, mit der das Verfahren durchgeführt wird. Diese Aufgabe wird durch die Merkmale der unabhängigen Ansprüche gelöst.
Beim erfindungsgemässen Verfahren wird aus einem Geschwindigkeitsistwert des Schienenfahrzeugs und aus einem vorgebbaren Geschwindigkeitssollwert ein Differenzgeschwindigkeitswert gebildet, aus dem anschliessend mit einem ersten zugmasseabhängigen Faktor ein begrenzter Beschleunigungssollwert gebildet wird. Mittels dem begrenzten Beschleunigungssollwert und einem Beschleunigungsistwert wird dann erfindungsgemäss ein Zugkraftsollwert generiert. Dadurch wird vorteilhaft erreicht, dass direkt auf die Zugkraft des Schienenfahrzeugs eingewirkt werden kann, wobei durch den begrenzten Beschleunigungssollwert auch der Zugkraftsollwert ebenfalls begrenzt wird und zugmasseabhängig bestimmt wird. Dies bewirkt eine stetige zugmasseangepasste Beschleunigung des Schienenfahrzeugs bis der Geschwindigkeitsistwert auf den Geschwindigkeitssollwert ausgeregelt ist.
Desweiteren wird erfindungsgemäss der Zugkraftsollwert durch Integration eines aus dem Beschleunigungsistwert und dem Beschleunigungssollwert gebildeten begrenzten Differenzbeschleunigungswertes generiert, wobei der Beschleunigungsistwert aus einem differenzierten Geschwindigkeitsistwert erzeugt wird. Der generierte Zugkraftsollwert wirkt derart auf einen Zugkraftregler ein, dass vorteilhaft der Geschwindigkeitsistwert auf den Geschwindigkeitssollwert ohne bleibende Regelabweichung ausgeregelt wird. Zusätzlich wird durch die Differenzierung des Geschwindigkeitsistwerts die vorstehend genannte Ausregelung stabilisiert, ohne dass ein unzulässiges Schwingen des Geschwindigkeitsistwerts beim Ausregelvorgang auf den Geschwindigkeitssollwert auftritt. Dadurch werden der Komfort des gesamten Zuges erhöht und mechanische Belastungen in den Zughaken und Zugkupplungen minimiert.

Die Vorrichung zur Durchführung des Verfahrens weist zur Bildung eines begrenzten Beschleunigungssollwertes einen Multiplizierer auf, mit dem ein erster Begrenzer und ein zur Bildung eines ersten zugmasseabhängigen Faktors vorgesehener erster Funktionsbildner verbunden ist. Weiterhin ist ein Summierer vorgesehen, der mit dem ersten Begrenzer und mit einer zur Bildung eines Beschleunigungsistwerts vorgesehenen Differenziereinrichtung verbunden ist. Der Summierer ist mit einem zweiten Begrenzer verbunden, wobei ein Differenzbeschleunigungswert am Ausgang des zweiten Begrenzers anliegt und einem Integrierer zur Generierung eines Zugkraftsollwerts zugeführt ist. Dadurch wird vorteilhaft eine Vorrichtung erreicht, die aufgrund ihres einfachen und mit wenigen Elementen auskommenden Aufbaus sowohl mit diskreten Bauelementen realisiert als auch beispielsweise in einem digitalen Signalprozessor implementiert werden kann. Sie stellt somit eine einfache und kostengünstige Lösung dar, die zusätzlich variabel umgesetzt und an verschiedenste Schienenfahrzeuge angepasst werden kann.

Diese und weitere Aufgaben, Vorteile und Merkmale der vorliegenden Erfindung werden aus der nachfolgenden Beschreibung eines bevorzugten Ausführungsbeispiels der Erfindung offensichtlich.

## Kurze Beschreibung der Zeichnungen

Nachfolgend wird die Erfindung anhand eines Ausführungsbeispiels im Zusammenhang mit der Zeichnung näher erläutert.

Es zeigen:

| | |
|---|---|
| **Fig. 1** | Eine Ausführungsform einer Vorrichtung zur Durchführung des Verfahrens zur Regelung der Geschwindigkeit eines Schienenfahrzeugs, |
| **Fig. 2** | eine Differenziereinrichtung zur Bildung eines Beschleunigungsistwertes, |
| **Fig. 3** | eine Zugmasseberechnungseinheit und Funktionsbildner zur Bildung zugmasseabhängiger Faktoren und |
| **Fig. 4 (Fig. 4-1 bis Fig. 4-3)** | ein Ablaufdiagramm eines Verfahrens zur Regelung der Geschwindigkeit eines Schienenfahrzeugs. |

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## Wege zur Ausführung der Erfindung

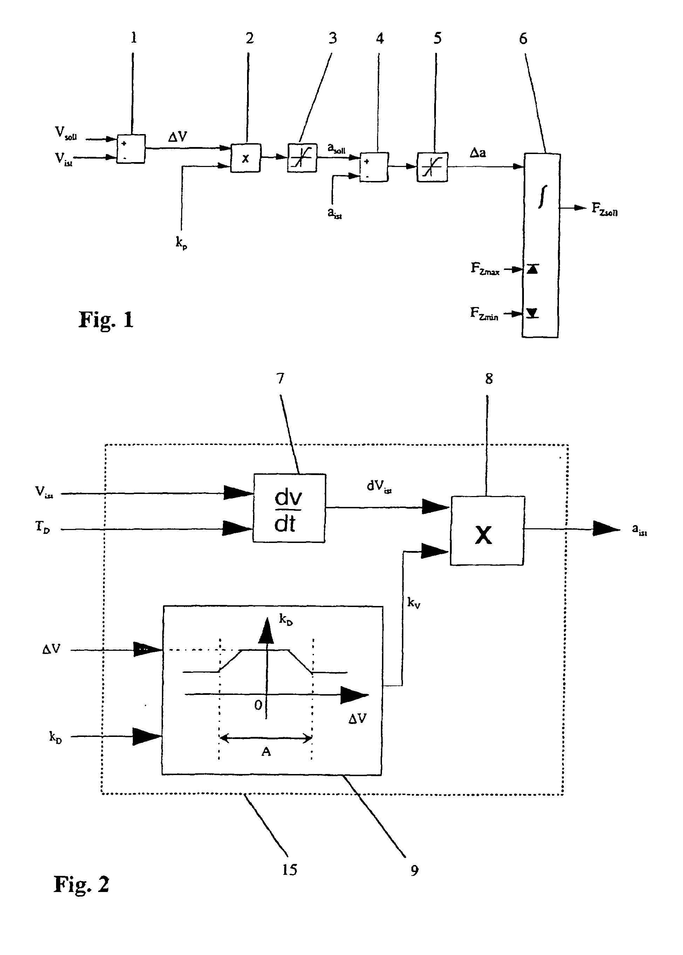

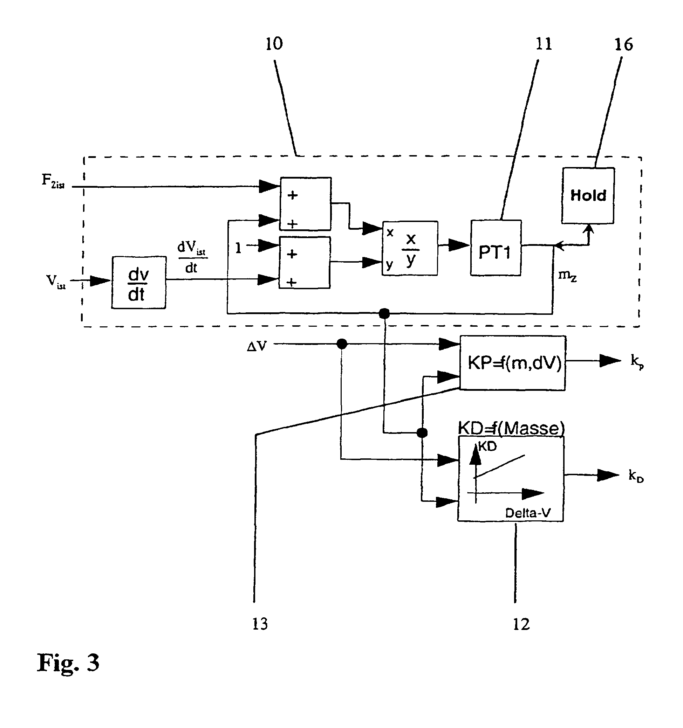

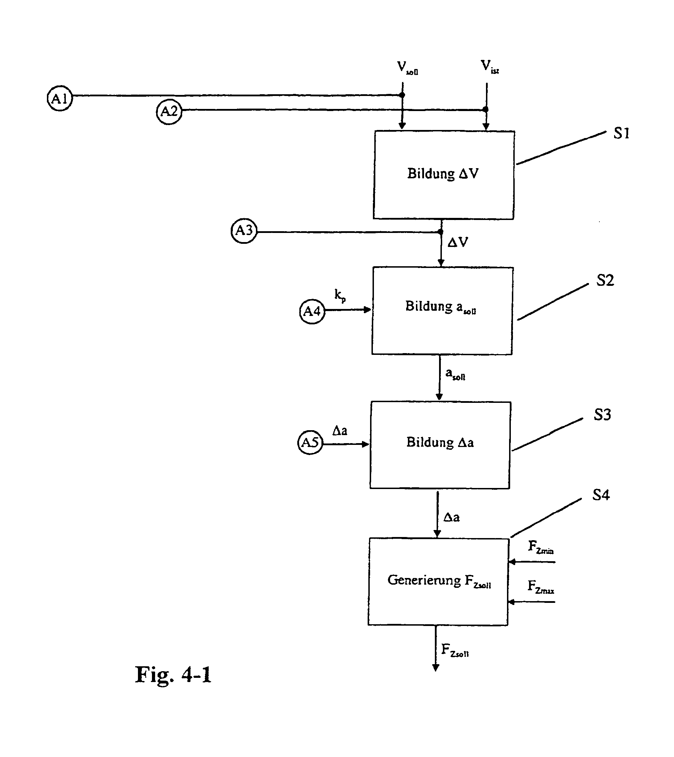

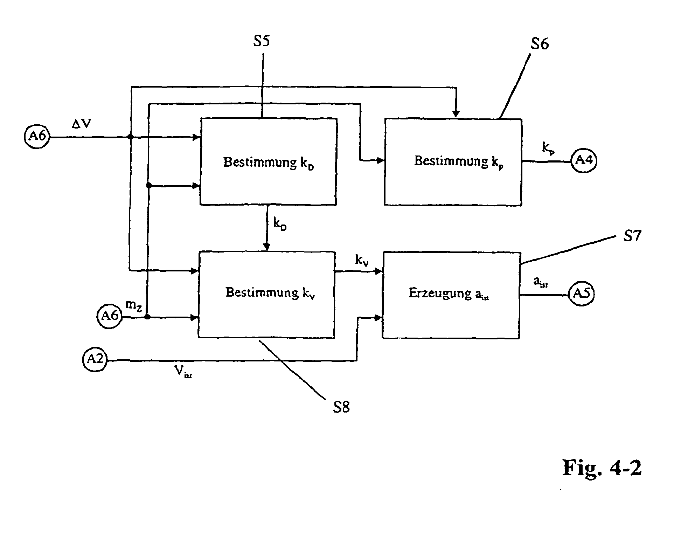

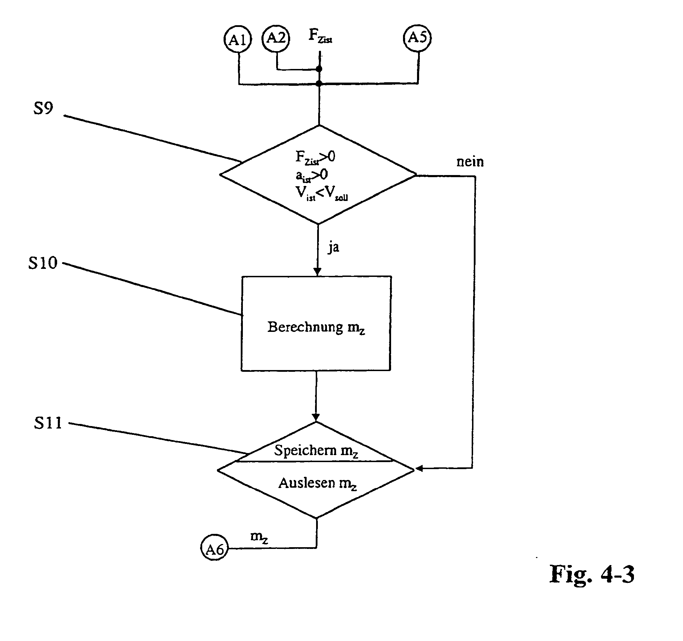

Fig. 1 zeigt eine erfindungsgemässe Ausführungsform der Vorrichtung zur Durchführung des Verfahrens zur Regelung der Geschwindigkeit eines Schienenfahrzeugs. In Fig. 4 ist zudem ein Ablaufdiagramm des erfindungsgemässen Verfahrens zur Regelung der Geschwindigkeit eines Schienenfahrzeugs gezeigt, die zu Darstellungszwecken in Fig. 4-1 bis Fig. 4-3 aufgeteilt ist. Die Vorrichtung umfasst einen ersten Summierer 1, dem ein Geschwindigkeitsistwert $(V_{ist})$, der beispielsweise von einem Sensor an einem Rad des Schienenfahrzeugs bereitgestellt wird, und ein Geschwindigkeitssollwert $(V_{soll})$, der vom Lokführer vorgegeben wird, zugeführt ist. Der erste Summierer 1 bildet aus dem Geschwindigkeitsistwert $(V_{ist})$ und dem Geschwindigkeitssollwert $(V_{soll})$ einen Differenzgeschwindigkeitswert $(\Delta V)$ (S1), wie dies ebenfalls im Ablaufdiagramm gemäss Fig.4-1 dargestellt ist. Dieser Differenzgeschwindigkeitswert $(\Delta V)$ wird erfindungsgemäss einem Multiplizierer 2 zugeführt, dem ebenfalls ein erster masseabhängiger Faktor $(k_p)$ zugeführt ist. Gemäss Fig. 4-2 wird der erste zugmasseabhängige Faktor $(k_p)$ wird in einem dafür vorgesehenen ersten Funktionsbildner 13 gemäss Fig. 3 gebildet (S6), der später beschrieben wird.

Gemäss Fig. 1 ist der Ausgang des Multiplizierers 2 mit einem ersten Begrenzer 3 verbunden, an dessen Ausgang ein begrenzter Beschleunigungssollwert $(a_{soll})$ gemäss Fig. 4-1 gebildet wird (S2). Aus dem Beschleunigungssollwert $(a_{soll})$ und einem Beschleunigungsistwert $(a_{ist})$ wird erfindungsgemäss gemäss Fig. 4-1 ein Zugkraftsollwert $(F_{Zsoll})$ generiert (S3, S4). Dazu wird zunächst aus dem Beschleunigungssollwert $(a_{soll})$ und dem Beschleunigungsistwert $(a_{ist})$ ein begrenzter Differenzbeschleunigungswert $(\Delta a)$ gebildet (S3). Der erste Begrenzer ist dazu mit einem zweiten Summierer 4 verbunden, dem somit der Beschleunigungssollwert $(a_{soll})$ zugeführt wird. Weiterhin ist dem zweiten Summierer 4 der Beschleunigungsistwert $(a_{ist})$ zugeführt, wobei der zweite Summierer 4 ausgangsseitig mit einem zweiten Begrenzer 5 verbunden ist, an dessen Ausgang der begrenzte Differenzbeschleunigungswert $(\Delta a)$ anliegt. Der zweite Begrenzer 5 ist erfindungsgemäss mit einem Integrierer 6 verbunden, der durch Integration des Differenzbeschleunigungswert $(\Delta a)$ den besagten Zugkraftsollwert $(F_{Zsoll})$ generiert (S4). Dem Integrierer 6 wird gemäss Fig. 1 beziehungsweise gemäss Fig. 4-1 ein oberer Zugkraftgrenzwert ($F_{Zmax}$) und ein unterer Zugkraftgrenzwert ($F_{Zmin}$) vorgegeben (S4).

Durch diese vorgebbaren Zugkraftgrenzwerte ($F_{Zmax}$, $F_{Zmin}$) wird der generierte Zugkraftsollwert ($F_{Zsoll}$) in den vorgegebenen Grenzwerten gehalten, wobei der Zugkraftsollwert ($F_{Zsoll}$) durch die Integration einen rampenförmigen Verlauf hat. Der Zugkraftsollwert ($F_{Zsoll}$) wird einem nicht dargestellten Zugkraftregler zugeführt, der das entsprechende Schienenfahrzeug beschleunigt oder verzögert. Der generierte Zugkraftsollwert ($F_{Zsoll}$) wirkt dabei derart auf einen Zugkraftregler, dass vorteilhaft der Geschwindigkeitsistwert ($V_{ist}$) auf den Geschwindigkeitssollwert ($V_{soll}$) ohne bleibende Regelabweichung ausgeregelt wird. Desweiteren ist durch die Begrenzung durch den oberen und unteren Zugkraftgrenzwert ($F_{Zmax}$, $F_{Zmin}$) gewährleistet, dass der Zugkraftsollwert ($F_{Zsoll}$) nicht unzulässig ansteigt, wodurch Instabilitäten im Zugkraftregler auftreten könnten oder ein zu schnelles Beschleunigen oder Verzögern des Fahrzeugs bewirkt werden würde.

In Fig. 2 ist eine Differenziereinrichtung 15 dargestellt, die zur Bildung des Beschleunigungsistwerts ($a_{ist}$) vorgesehen ist. Die Differenziereinrichtung 15 weist einen Differenzierer 7 auf, dem eingangsseitig der Geschwindigkeitsistwert ($V_{ist}$) und eine vorgebbare Zeitkonstante ($T_D$) zugeführt ist. Der Geschwindigkeitsistwert ($V_{ist}$) wird im Differenzierer 7 differenziert. Somit dient der Differenzierer 7 der Bildung eines differenzierten Geschwindigkeitsistwerts ($dV_{ist}$), der am Ausgang des Differenzierers 7 anliegt. Mit der dem Differenzierer 7 zugeführten Zeitkonstante ($T_D$) kann die Differenzierung zeitlich gewichtet werden, d.h. es kann festgelegt werden, in welcher zeitlichen Abhängigkeit eine solche Differenzierung stattfinden soll. Darüberhinaus weist die Differenziereinrichtung 15 einen Multiplizierer 8 auf, dem der differenzierte Geschwindigkeitsistwert ($dV_{ist}$) und ein Verstärkungsfaktor ($k_V$) zugeführt sind. Durch Multiplikation des differenzierten Geschwindigkeitsistwerts ($dV_{ist}$) und des Verstärkungsfaktors ($k_V$) gemäss Fig. 2 wird der Beschleunigungsistwert ($a_{ist}$) gemäss Fig.4-2 erzeugt (S7), wobei gemäss Fig. 2 der Beschleunigungsistwert ($a_{ist}$) am Ausgang des Multiplizierers 8 anliegt. Gemäss Fig. 1 ist, wie bereits erwähnt, dem zweiten Summierer 4 der Beschleunigungsistwert ($a_{ist}$) zugeführt, der zu diesem Zweck gemäss Fig. 2 aus der Differenziereinrichtung 15, insbesondere aus dem Ausgang des Multiplizierers 8, herausgeführt ist, wobei der zweite Summierer 4 mit der Differenziereinrichtung 15 gemäss Fig. 1 und Fig. 2 verbunden ist.

Die Differenziereinrichtung 15 umfasst gemäss Fig. 2 desweiteren einen zweiten Funktionsbildner 9. Diesem zweiten Funktionsbildner 9 ist der Differenzgeschwindigkeitswert ($\Delta V$) zugeführt, der gemäss Fig. 1 im ersten Summierer 1 gebildet wird. Weiterhin ist dem zweiten Funktionsbildner 9 ein zweiter zugmasseabhängiger Faktor ($k_D$) zugeführt, der gemäss Fig. 3 in einem dritten Funktionbildner 12 gebildet wird, wobei der dritte Funktionsbildner 12 zum Zwecke der Zuführung des zweiten zugmasseabhängigen Faktors ($k_D$) mit dem zweiten Funktionsbildner 9 gemäss Fig. 2 und Fig. 3 verbunden ist. Es hat sich als sehr vorteilhaft erwiesen, die vorgebbare Zeitkonstante ($T_D$) wesentlich kleiner als den zweiten zugmasseabhängigen Faktor ($k_D$) zu wählen, so dass auf äussere Störgrössen sehr gut reagiert werden kann.

Wie das Ablaufdiagramm gemäss Fig. 4-2 zeigt sowie gemäss Fig. 2 wird im zweiten Funktionsbildner 9 aus dem Differenzgeschwindigkeitswert ($\Delta V$) und dem zweiten zugmasseabhängigen Faktor ($k_D$) der Verstärkungsfaktors ($k_V$) über eine abschnittsweise definierte Funktion bestimmt (S8). Die abschnittsweise definierte Funktion gewichtet den zweiten zugmasseabhängigen Faktor ($k_D$) in Abhängigkeit des Differenzgeschwindigkeitswerts ($\Delta V$) je nach Grösse des aktuellen Differenzgeschwindigkeitswerts ($\Delta V$) in der in Fig. 2 gezeigten Weise und gibt den Verstärkungsfaktors ($k_V$) aus, der am Ausgang des zweiten Funktionsbildners 9 anliegt. Gemäss Fig. 2 weist die abschnittsweise definierte Funktion einen Annäherungsbereich (A) auf, der um den Wert Null des Differenzgeschwindigkeitswerts ($\Delta V$) liegt, d.h. der Geschwindigkeitsistwert ($V_{ist}$) hat sich dem Geschwindigkeitssollwert ($V_{soll}$) angenähert. Vorzugsweise liegt der Annäherungsbereich im wesentlichen zwischen -20 km/h und +20km/h. Innerhalb des Annäherungsbereichs (A) umfasst die abschnittssweise definierte Funktion einen trapezförmigen Verlauf mit linearen Teilstücken. Dadurch wird der zweite zugmasseabhängige Faktor ($k_D$) im Annäherungsbereich (A) des Geschwindigkeitsistwerts ($V_{ist}$) an den Geschwindigkeitssollwert ($V_{soll}$) zur Bestimmung des Verstärkungsfaktors ($k_V$) stärker gewichtet als ausserhalb des Annäherungsbereichs (A), wodurch eine erwünschte präzise Ausregelung des Geschwindigkeitsistwerts ($V_{ist}$) auf den Geschwindigkeitssollwert ($V_{soll}$) gewährleistet ist. Ausserhalb des Annäherungsbereichs (A) weist die abschnittssweise definierte Funktion einen konstanten Verlauf auf.

Durch die vorstehend beschriebene Differenziereinrichtung und insbesondere durch die Differenzierung des Geschwindigkeitsistwertes ($V_{ist}$) und dessen Multiplikation mit dem Verstärkungsfaktor ($k_V$) zur Bildung des Beschleunigungsistwertes ($a_{ist}$) wird die Ausregelung des Geschwindigkeitsistwerts ($V_{ist}$) auf den Geschwindigkeitssollwert ($V_{soll}$) vorteilhaft stabilisiert, so dass ein unerwünschtes Schwingen des Geschwindigkeitsistwertes ($V_{ist}$) beim Ausregelvorgang auf den Geschwindigkeitssollwert ($V_{soll}$) unterbleibt. Die mechanischen Belastungen der Zughaken und Zugkupplungen werden dadurch minimiert und insbesondere bei Personenbeförderungen wird der Komfort erhöht.

In Fig. 3 ist eine Zugmasseberechnungseinheit 10 und der erste Funktionsbildner 13 zur Bildung des ersten zugmasseabhängige Faktor ($k_p$) sowie der dritte Funktionsbildner 12 zur Bildung des zweiten zugmasseabhängigen Faktors ($k_D$) dargestellt. Der Zugmasseberechnungseinheit 10 ist der Geschwindigkeitsistwert ($V_{ist}$) und ein Zugkraftistwert ($F_{Zist}$) zugeführt. In der vorgesehenen Zugmasseberechnungseinheit 10 wird aus dem zugeführten Geschwindigkeitsistwert ($V_{ist}$) und dem Zugkraftistwert ($F_{Zist}$) eine Zugmassewert ($m_Z$) gemäss

$$m_Z = \frac{F_{Zist} + m_{Z,alt}}{1 + \frac{dV_{ist}}{dt}}$$

berechnet, wobei ($m_{Z,alt}$) ein vorherig berechneter Zugmassewert ist. Fig. 4-3 zeigt die Berechnung des Zugmassewertes ($m_Z$) (S10) im Ablaufdiagramm. Fig. 3 zeigt beispielhaft eine Umsetzung der vorstehend angegebenen Formel zur Berechnung des Zugmasswertes ($m_Z$) in der Zugmasseberechnungseinheit 10. Weiterhin umfasst die Zugmasseberechnungseinheit 10 ein zur Bildung des vorherig berechneten Zugmassewertes ($m_{Z,alt}$) vorgesehenes Verzögerungsglied erster Ordnung 11. Die Berechnung des Zugmassewertes ($m_Z$) gemäss der angeführten Formel ist dadurch sehr einfach und mit geringem Aufwand umsetzbar.

Erfindungsgemäss wird der Zugmassewert ($m_Z$) in der Zugmasseberechnungseinheit 10 gemäss Fig.4-3 sowie gemäss Fig. 3 nur bei einem Zugkraftistwert ($F_{Zist}$) im wesentlichen grösser Null und bei einem Beschleunigungsistwert ($a_{ist}$) im wesentlichen grösser Null und bei einem Geschwindigkeitsistwerts ($V_{ist}$) im wesentlichen kleiner als der Geschwindigkeitssollwert ($V_{soll}$) berechnet (S9). Dadurch wird besonders vorteilhaft bei einer gewollten Beschleunigung des Schienenfahrzeugs, d.h. wenn der Beschleunigungsistwert ($a_{ist}$) im wesentlichen grösser Null ist, die Zugmasse für die Ausregelung des Geschwindigkeitsistwerts ($V_{ist}$) auf den Geschwindigkeitssollwert ($V_{soll}$) berücksichtigt. Der berechnete Zugmassewert ($m_Z$) dient der vorstehend beschriebenen Bildung des ersten zugmasseabhängige Faktor ($k_p$) sowie der Bildung des zweiten zugmasseabhängigen Faktors ($k_D$). Desweiteren wird bei einer Bremsung des Schienenfahrzeugs vorteilhaft keine Berechnung des Zugmassewertes ($m_Z$) durchgeführt, da eventuelle mechanische Bremseingriffe zu einer falschen Berechnung führen können. Gemäss Fig. 4-3 wird dazu der bei der vorstehend beschriebenen Beschleunigung des Schienenfahrzeugs berechnete Zugmassewert ($m_Z$) (S 10) in einem Halteglied 16 gemäss Fig. 3, das mit dem Verzögerungsglied erster Ordnung 11 verbunden ist, gespeichert (S11). Beim Bremsvorgang des Schienenfahrzeugs, d.h bei einem Zugkraftistwert ($F_{Zist}$) im wesentlichen kleiner oder gleich Null und bei einem Beschleunigungsistwert ($a_{ist}$) im wesentlichen kleiner oder gleich Null und bei einem Geschwindigkeitsistwert ($V_{ist}$) im wesentlichen grösser oder gleich dem Geschwindigkeitssollwert ($V_{soll}$), wird der gespeicherte Zugmassewert ($m_Z$) aus dem Halteglied 16 ausgelesen (S9, S11), wobei der ausgelesene Zugmassewert ($m_Z$) auch bei der Bremsung des Schienenfahrzeugs der vorstehend beschriebenen Bildung des ersten zugmasseabhängige Faktor ($k_p$) sowie der Bildung des zweiten zugmasseabhängigen Faktors ($k_D$) dient.

Gemäss Fig. 3 ist der bereits erwähnte erste Funktionsbildner 13 vorgesehen, der zur Bestimmung des ersten zugmasseabhängigen Faktors ($k_p$) gemäss Fig. 4-2 dient (S6). Diesem ersten Funktionsbildner 13 ist erfindungsgemäss der Differenzgeschwindigkeitswert ($\Delta V$) und der berechnete Zugmassewert ($m_Z$) zugeführt. Der erste zugmasseabhängige Faktor ($k_p$) wird im ersten Funktionsbildner 13 erfindungsgemäss in Abhängigkeit des zugeführten Differenzgeschwindigkeitswert ($\Delta V$) und des Zugmassewert ($m_Z$) gebildet. Der erste zugmasseabhängige Faktor ($k_p$) wird, wie bereits beschrieben, dem Multiplizierer 2 zugeführt, so dass der erste Funktionsbildner 13 in nicht dargestellter Weise mit dem Multiplizierer 2 verbunden ist.

Weiterhin ist gemäss Fig. 3, wie bereits beschrieben, der dritte Funktionsbildner 12 vorgesehen, der der Bestimmung des zweiten zugmasseabhängigen Faktors ($k_D$) gemäss Fig. 4-2 dient (S5). Diesem dritten Funktionsbildner 12 ist erfindungsgemäss der Differenzgeschwindigkeitswert ($\Delta V$) und der berechnete Zugmassewert ($m_Z$) zugeführt. Es hat sich als äusserst vorteilhaft erwiesen, dass der zweite zugmasseabhängige Faktor ($k_D$) im dritten Funktionsbildner 12 in Abhängigkeit vom Differenzgeschwindigkeitswert ($\Delta V$) und in Abhängigkeit von einer Wurzelfunktion des Zugmassewerts ($m_Z$) gebildet wird. Dadurch wird eine weitere Verbesserung der Stabilität der Ausregelung des Geschwindigkeitsistwert ($V_{ist}$) auf den Geschwindigkeitssollwert ($V_{soll}$) erreicht.

Das angegebene Verfahren zur Regelung der Geschwindigkeit eines Schienenfahrzeugs und die zugehörige Vorrichtung eignen sich auch besonders gut als Rückwärtsrollbegrenzer für Gefällestücke des Schienennetzes, da bei einem gewünschten Halt des Schienenfahrzeugs der Geschwindigkeitssollwert ($V_{soll}$) den Wert Null aufweist und die Ausregelung des Geschwindigkeitsistwerts ($V_{ist}$) auch auf diesen Geschwindigkeitssollwert ($V_{soll}$) erfolgt. Dadurch wird verhindert, dass das Schienenfahrzeug bei einem Halt an einem Gefällestück in rückwärtiger Richtung rollt und somit in gewünschte Weise am Halteort stehen bleibt. Ein zusätzlicher Einsatz einer mechanischen Bremse zur Verhinderung des Rückwärtsrollens ist damit überflüssig.

Erfindungsgemäss kann die Vorrichtung zur Durchführung des Verfahrens in mindestens einem nicht dargestellten digitalen Mikroprozessor implementiert werden, so dass vorteilhaft auf diskrete Bauteile verzichtet werden kann und eine Anpassung der Vorrichtung an Schienenfahrzeuge verschiedenster Anwendungen erleichtert wird und somit einfach vollzogen werden kann.

Es versteht sich, dass andere als die im Ausführungsbeispiel angegebenen Blöcke, Signale und Werte verwendet werden können.

**Bezugszeichenliste**

1 erster Summierer
2 Multiplizierer
3 erster Begrenzer
4 zweiter Summierer
5 zweiter Begrenzer
6 Integrierer
7 Differenzierer
8 Multiplizierer
9 zweiter Funktionsbildner
10 Zugmasseberechnungseinheit
11 Verzögerungsglied erster Ordnung
12 dritter Funktionsbildner
13 erster Funktionsbildner
14 Integrierer mit Haltefunktion
15 Differenziereinrichtung
16 Halteglied

**Patentansprüche**

1. Verfahren zur Regelung der Geschwindigkeit eines Schienenfahrzeugs, bei dem aus einem Geschwindigkeitsistwert ($V_{ist}$) des Schienenfahrzeugs und aus einem vorgebbaren Geschwindigkeitssollwert ($V_{soll}$) ein Differenzgeschwindigkeitswert ($\Delta V$) gebildet wird (S1), **dadurch gekennzeichnet,**
**dass** aus dem Differenzgeschwindigkeitswert ($\Delta V$) und einem ersten zugmasseabhängigen Faktor ($k_P$) mittels eines Multiplizierers und eines Begrenzers ein begrenzter Beschleunigungssollwert ($a_{soll}$) gebildet wird (S2), dass aus dem begrenzten Beschleunigungssollwert ($a_{soll}$) und einem Beschleunigungsistwert ($a_{ist}$) ein Zugkraftsollwert ($F_{Zsoll}$) generiert wird (S3, S4),
**dass** aus dem Beschleunigungsistwert ($a_{ist}$) und dem begrenzten Beschleunigungssollwert ($a_{soll}$) ein begrenzter Differenzbeschleunigungswert ($\Delta a$) gebildet wird (S3) und dass aus dem begrenzten Differenzbeschleunigungswert ($\Delta a$) mittels eines Integrierers der Zugkraftsollwert ($F_{Zsoll}$) generiert wird (S4).

2. Verfahren nach Anspruch 1, **dadurch gekennzeichnet, dass** der Integration des Differenzbeschleunigungswerts ($\Delta a$) ein oberer Zugkraftgrenzwert ($F_{Zmax}$) und ein unterer Zugkraftgrenzwert ($F_{Zmin}$) vorgegeben wird (S4).

3. Verfahren nach Anspruch 1, **dadurch gekennzeichnet, dass** der Geschwindigkeitsistwerts ($V_{ist}$) differenziert wird und aus dem differenzierten Geschwindigkeitsistwerts ($dV_{ist}$) durch Multiplikation mit einem Verstärkungsfaktor ($k_V$) der Beschleunigungsistwert ($a_{ist}$) erzeugt wird (S7).

4. Verfahren nach Anspruch 3, **dadurch gekennzeichnet, dass** der Verstärkungsfaktor ($k_V$) aus einem zweiten zugmasseabhängigen Faktor ($k_D$) und dem Differenzgeschwindigkeitswert ($\Delta V$) über eine abschnittsweis definierte Funktion bestimmt wird (S8).

5. Verfahren nach Anspruch 4, **dadurch gekennzeichnet, dass** die abschnittsweis definierte Funktion einen Annäherungsbereich (A) aufweist, der in der Grössenordnung um Null des Differenzgeschwindigkeitswerts ($\Delta V$) liegt und einen trapezförmigen Verlauf der Funktion mit linearen Teilstücken umfasst, wobei die Funktion ausserhalb des Annäherungsbereich (A) einen konstanten aufweist.

6. Verfahren nach Anspruch 1, **dadurch gekennzeichnet, dass** der erste zugmasseabhängige Faktor ($k_P$) als eine Funktion des Differenzgeschwindigkeitswerts ($\Delta V$) und eines berechneten Zugmassewertes ($m_Z$) bestimmt wird (S6), wobei der Zugmassewert ($m_Z$) gemäss

$$m_Z = \frac{F_{Zist} + m_{Z,alt}}{1 + \frac{dV_{ist}}{dt}}$$

berechnet wird (S10) und $m_{Z,alt}$ ein vorherig berechneter Zugmassewert und $F_{Zist}$ ein Zugkraftistwert ist.

7. Verfahren nach Anspruch 4, **dadurch gekennzeichnet, dass** der zweite zugmasseabhängige Faktor ($k_D$) als eine Funktion des Differenzgeschwindigkeitswerts ($\Delta V$) und einer Wurzelfunktion eines berechneten Zugmassewertes ($m_Z$) bestimmt wird (S5), wobei der Zugmassewert (mz) gemäss

$$m_Z = \frac{F_{Zist} + m_{Z,alt}}{1 + \frac{dV_{ist}}{dt}}$$

berechnet wird (S10) und $m_{Z,alt}$ ein vorherig berechneter Zugmassewert und $F_{Zist}$ ein Zugkraftistwert ist.

8. Verfahren nach Anspruch 6 und 7, **dadurch gekennzeichnet, dass** der Zugmassewert ($m_Z$) nur bei einem Zugkraftistwert ($F_{Zist}$) im wesentlichen grösser Null und bei einem Beschleunigungsistwert ($a_{ist}$) im wesentlichen grösser Null und bei einem Geschwindigkeitsistwerts ($V_{ist}$) im wesentlichen kleiner als der Geschwindigkeitssollwert ($V_{soll}$) berechnet wird (S9).

9. Verfahren nach Anspruch 8, **dadurch gekennzeichnet, dass** der Zugmassewert ($m_Z$) gespeichert wird (S11) und bei einem Zugkraftistwert ($F_{Zist}$) im wesentlichen kleiner oder gleich Null und bei einem Beschleunigungsistwert ($a_{ist}$) im wesentlichen kleiner oder gleich Null und bei einem Geschwindigkeitsistwerts ($V_{ist}$) im wesentlichen grösser oder gleich dem Geschwindigkeitssollwert ($V_{soll}$) ausgelesen wird (S9, S11).

10. Vorrichtung zur Durchführung eines Verfahrens zur Regelung der Geschwindigkeit eines Schienenfahrzeugs, bei der zur Bildung eines Differenzgeschwindigkeitswerts ($\Delta V$) ein Geschwindigkeitsistwert ($V_{ist}$) des Schienenfahrzeugs und ein vorgebbarer Geschwindigkeitssollwert ($V_{soll}$) einem ersten Summierer (1) zugeführt ist, **dadurch gekennzeichnet, dass** zur Bildung eines begrenzten Beschleunigungssollwertes ($a_{soll}$) ein Multiplizierer (2) vorgesehen ist, mit dem ein erster Begrenzer (3), ein zur Bestimmung eines ersten zugmasseabhängigen Faktors ($k_P$) vorgesehener erster Funktionsbildner (13) und der erste Summierer (1) verbunden ist und dass zur Generierung eines Zugkraftsollwertes ($F_{Zsoll}$) ein Integrierer (6) vorgesehen ist.

11. Vorrichtung nach Anspruch 10, **dadurch gekennzeichnet, dass** ein zweiter Summierer (4) vorgesehen ist, der mit dem ersten Begrenzer (3) und mit einer zur Erzeugung eines Beschleunigungsistwerts ($a_{ist}$) vorgesehene Differenziereinrichtung (15) verbunden ist und dass der zweite Summierer (4) mit einem zweiten Begrenzer (5) verbunden ist, wobei ein Differenzbeschleunigungswerts ($\Delta a$) am Ausgang des zweiten Begrenzers (5) anliegt.

12. Vorrichtung nach Anspruch 11, **dadurch gekennzeichnet, dass** der zweite Begrenzer (5) ausgangsseitig mit dem Integrierer (6) verbunden ist, der der Generierung des Zugkraftsollwertes ($F_{Zsoll}$) durch Integration des Differenzbeschleunigungswerts ($\Delta a$) dient.

13. Vorrichtung nach Anspruch 12, **dadurch gekennzeichnet, dass** dem Integrierer (6) zur Integration ein oberer Zugkraftgrenzwert ($F_{Zmax}$) und ein unterer Zugkraftgrenzwert ($F_{Zmin}$) vorgebbar ist.

14. Vorrichtung nach Anspruch 12, **dadurch gekennzeichnet, dass** die Differenziereinrichtung (15) einen Differenzierer (7) aufweist, dem zur Bildung eines differenzierten Geschwindigkeitsistwertes ($dV_{ist}$) der Geschwindigkeitsistwert ($V_{ist}$) und eine vorgebbare Zeitkonstante ($T_D$) zugeführt ist.

15. Vorrichtung nach Anspruch 14, **dadurch gekennzeichnet, dass** die Differenziereinrichtung (15) einen Multiplizierer (8) aufweist, dem der differenzierte Geschwindigkeitsistwert ($dV_{ist}$) und ein Verstärkungsfaktor ($k_V$) zugeführt sind, wobei an dessen Ausgang der Beschleinigungsistwert ($a_{ist}$) anliegt.

**16.** Vorrichtung nach Anspruch 15, **dadurch gekennzeichnet, dass** die Differenziereinrichtung (15) einen zweiten Funktionsbildner (9) aufweist, der der Bestimmung des Verstärkungsfaktors ($k_V$) aus einem dem zweiten Funktionsbildner (9) zugeführten zweiten zugmasseabhängigen Faktor ($k_D$) und dem dem zweiten Funktionsbildner (9) zugeführten Differenzgeschwindigkeitswert ($\Delta V$) über eine abschnittsweis definierte Funktion dient.

**17.** Vorrichtung nach Anspruch 16, **dadurch gekennzeichnet, dass** eine Zugmasseberechnungseinheit (10) zur Berechnung eines Zugmassewerts ($m_Z$) vorgesehen ist.

**18.** Vorrichtung nach Anspruch 17, **dadurch gekennzeichnet, dass** der Zugmasseberechnungseinheit (10) der Geschwindigkeitsistwert ($V_{ist}$) und ein Zugkraftistwert ($F_{Zist}$) zugeführt ist.

**19.** Vorrichtung nach Anspruch 18, **dadurch gekennzeichnet, dass** die Zugmasseberechnungseinheit (10) ein Verzögerungsglied erster Ordnung (11) und ein damit verbundenes Halteglied (16) aufweist.

**20.** Vorrichtung nach Anspruch 17, **dadurch gekennzeichnet, dass** dem ersten Funktionsbildner (13) der Differenzgeschwindigkeitswert ($\Delta V$) und der berechnete Zugmassewert ($m_Z$) zugeführt ist.

**21.** Vorrichtung nach Anspruch 17, **dadurch gekennzeichnet, dass** ein dritter Funktionsbildner (12) vorgesehen ist, der der Bestimmung des zweiten zugmasseabhängigen Faktors ($k_D$) dient und dem der Differenzgeschwindigkeitswerts ($\Delta V$) und der berechneter Zugmassewert ($m_Z$) zugeführt ist.

**22.** Vorrichtung nach einem der Ansprüche 10-21, **dadurch gekennzeichnet, dass** die Vorrichtung in mindestens einem digitalen Mikroprozessor implementiert ist.

**Claims**

**1.** A method for controlling the speed of a rail vehicle, wherein a differential speed value ($\Delta V$) is formed (S1) from an actual speed value ($V_{ist}$) of the rail vehicle and from a predetermined nominal speed value ($V_{soll}$),
**characterized in**
**that** a bounded nominal acceleration value ($a_{soll}$) is formed (S2) by means of a multiplier and a limiter from the differential speed value ($\Delta V$) and a first train mass-dependent factor ($k_P$), in that a nominal tractive power value ($F_{Zsoll}$) is generated (S3, S4) from the bounded nominal acceleration value ($a_{soll}$) and an actual acceleration value ($a_{ist}$), in that a bounded differential acceleration value ($\Delta a$) is formed (S3) from the actual acceleration value ($a_{ist}$) and the bounded nominal acceleration value ($a_{soll}$), and in that the nominal tractive power value ($F_{Zsoll}$) is generated (S4) from the bounded differential acceleration value ($\Delta a$) by means of an integrator.

**2.** The method according to Claim 1, **characterized in that** an upper limiting value ($F_{Zmax}$) for the tractive power and a lower limiting value ($F_{Zmin}$) for the tractive power are defined (S4) for the integration of the differential acceleration value ($\Delta a$).

**3.** The method according to Claim 1, **characterized in that** the actual speed value ($V_{ist}$) is differentiated and the actual acceleration value ($a_{ist}$) is generated (S7) from the differentiated actual speed value ($dV_{ist}$) by means of multiplication with an amplification factor ($k_V$).

**4.** The method according to Claim 3, **characterized in that** the amplification factor ($k_V$) is determined (S8) from a second train mass-dependent factor ($k_D$) and the differential speed value ($\Delta V$) by means of a sectionally defined function.

**5.** The method according to Claim 4, **characterized in that** the sectionally defined function comprises an approximation range (A) that lies in the order of zero of the differential speed value ($\Delta V$) and has a trapezoidal progression of the function with linear segments, wherein the function has a constant progression outside the approximation range (A).

**6.** The method according to Claim 1, **characterized in that** the first train mass-dependent factor ($k_P$) is determined (S6) in the form of a function of the differential speed value ($\Delta V$) and a calculated train mass value ($m_Z$), wherein the train mass value ($m_Z$) is calculated (S10) in accordance with $m_Z = \dfrac{F_{Zist} + m_{Z,alt}}{1 + \dfrac{dV_{ist}}{dt}}$ , and wherein $m_{Z,alt}$

is a previously calculated train mass value and $F_{Zist}$ is an actual tractive power value.

7. The method according to Claim 4, **characterized in that** the second train mass-dependent factor ($k_D$) is determined (S5) in the form of a function of the differential speed value ($\Delta V$) and a root function of a calculated train mass value ($m_Z$), wherein the train mass value ($m_Z$) is calculated (S10) in accordance with $m_Z = \dfrac{F_{Zist} + m_{Z,alt}}{1 + \dfrac{dV_{ist}}{dt}}$ , and wherein $m_{Z,alt}$ is a previously calculated train mass value and $F_{Zist}$ is an actual tractive power value.

8. The method according to Claims 6 and 7, **characterized in that** the train mass value ($m_Z$) is only calculated (S9) at an actual tractive power value ($F_{Zist}$) that is significantly higher than zero and at an actual acceleration value ($a_{ist}$) that is significantly higher than zero and at an actual speed value ($V_{ist}$) that is significantly lower than the nominal speed value ($V_{soll}$).

9. The method according to Claim 8, **characterized in that** the train mass value ($m_Z$) is stored (S11) and read out (S9, S11) at an actual tractive power value ($F_{Zist}$) that is significantly lower or equal to zero and at an actual acceleration value ($a_{ist}$) that is significantly lower or equal to zero and at an actual speed value ($V_{ist}$) that is significantly higher or equal to the nominal speed value ($V_{soll}$).

10. A device for carrying out a method for controlling the speed of a rail vehicle, in which an actual speed value ($V_{ist}$) of the rail vehicle and a predetermined nominal speed value ($V_{soll}$) are fed to a first summer (1) in order to form a differential speed value ($\Delta V$), **characterized in that** a multiplier (2) is provided in order to form a bounded nominal acceleration value ($a_{soll}$), wherein the multiplier is connected to a first limiter (3), a first function generator (13) provided for determining a first train mass-dependent factor ($k_P$) and the first summer (1), and **in that** an integrator (6) is provided in order to generate a nominal tractive power value ($F_{Zsoll}$).

11. The device according to Claim 10, **characterized in that** a second summer (4) is provided which is connected to the first limiter (3) and to a differentiating device (15) provided for generating an actual acceleration value ($a_{ist}$), and **in that** the second summer (4) is connected to a second limiter (5), wherein a differential acceleration value ($\Delta a$) is present at the output of the second limiter (5).

12. The device according to Claim 11, **characterized in that** the output of the second limiter (5) is connected to the integrator (6) that serves for generating the nominal tractive power value ($F_{Zsoll}$) by means of an integration of the differential acceleration value ($\Delta a$).

13. The device according to Claim 12, **characterized in that** an upper limiting value ($F_{Zmax}$) for the tractive power and a lower limiting value ($F_{Zmin}$) for the tractive power are presetable for the integration in the integrator (6).

14. The device according to Claim 12, **characterized in that** the differentiating device (15) contains a differentiator (7), wherein the actual speed value ($V_{ist}$) and a presetable time constant ($T_D$) are fed to this differentiator in order to form a differentiated actual speed value ($dV_{ist}$).

15. The device according to Claim 14, **characterized in that** the differentiating device (15) contains a multiplier (8), wherein the differentiated actual speed value ($dV_{ist}$) and an amplification factor ($k_V$) are fed to this multiplier, and wherein the actual acceleration value ($a_{ist}$) is present at its output.

16. The device according to Claim 15, **characterized in that** the differentiating device (15) contains a second function generator (9) that serves for determining the amplification factor ($k_V$) from a second train mass-dependent factor ($k_D$) fed to the second function generator (9) and the differential speed value ($\Delta V$) fed to the second function generator (9) by means of a sectionally defined function.

**17.** The device according to Claim 16, **characterized in that** a train mass calculating unit (10) is provided for calculating the train mass value ($m_Z$).

**18.** The device according to Claim 17, **characterized in that** the actual speed value ($V_{ist}$) and an actual tractive power value ($F_{Zist}$) are fed to the train mass calculating unit (10).

**19.** The device according to Claim 18, **characterized in that** the train mass calculating unit (10) contains a first- order time-delay element (11) and a holding element (16) connected thereto.

**20.** The device according to Claim 17, **characterized in that** the differential speed value ($\Delta V$) and the calculated train mass value ($m_Z$) are fed to the first function generator (13).

**21.** The device according to Claim 17, **characterized in that** a third function generator (12) is provided for determining the second train mass-dependent factor ($k_D$), wherein the differential speed value ($\Delta V$) and the calculated train mass value ($m_Z$) are fed to the third function generator.

**22.** The device according to one of Claims 10-21, **characterized in that** the device is implemented in at least one digital microprocessor.

## Revendications

**1.** Procédé de régulation de la vitesse d'un véhicule ferroviaire, par lequel, à partir d'une valeur réelle de vitesse ($V_{ist}$) du véhicule ferroviaire et d'une valeur théorique de vitesse prescriptible ($V_{soll}$), on constitue (S1) une valeur de vitesse différentielle ($\Delta V$),
**caractérisé en ce que**,
à partir de la valeur de vitesse différentielle ($\Delta V$) et d'un premier facteur dépendant de la masse du train ($k_P$), on constitue (S2) par un multiplicateur (2) et un limiteur une valeur théorique limitée d'accélération ($a_{soll}$), et qu'à partir de la valeur théorique limitée d'accélération ($a_{soll}$) et d'une valeur réelle d'accélération ($a_{ist}$), on génère (S3, S4) une valeur théorique de force de traction ($F_{Zsoll}$), et qu'à partir de la valeur réelle d'accélération ($a_{ist}$) et de la valeur théorique limitée d'accélération ($a_{soll}$), on constitue (S3) une valeur limitée d'accélération différentielle ($\Delta a$) et qu'à partir de la valeur limitée d'accélération différentielle ($\Delta a$), on génère par un intégrateur la valeur théorique de force de traction ($F_{Zsoll}$).

**2.** Procédé selon la revendication 1, **caractérisé en ce que**, pour l'intégration de la valeur d'accélération différentielle ($\Delta a$), une valeur limite supérieure de force de traction ($F_{Zmax}$) et une valeur limite inférieure de force de traction ($F_{Zmin}$) sont prédéfinies (S4).

**3.** Procédé selon la revendication 1, **caractérisé en ce que** la valeur réelle de vitesse ($V_{ist}$) est différenciée et qu'à partir de la valeur réelle différenciée de vitesse ($d_{Vist}$), on génère (S7), par multiplication avec un facteur d'amplification ($k_V$), la valeur réelle d'accélération ($a_{ist}$).

**4.** Procédé selon la revendication 3, **caractérisé en ce que** le facteur d'amplification ($k_V$) est déterminé à partir d'un deuxième facteur dépendant de la masse du train ($K_D$) et de la valeur de vitesse différentielle ($\Delta V$) au moyen d'une fonction définie par sections (S8).

**5.** Procédé selon la revendication 4, **caractérisé en ce que** la fonction définie par sections présente une plage d'approximation (A) qui se situe dans l'ordre de grandeur autour de zéro de la valeur de vitesse différentielle ($\Delta V$) et englobe une allure trapézoïdale de la fonction avec des unités partielles linéaires, la fonction présentant une allure constante à l'extérieur de la plage d'approximation (A).

**6.** Procédé selon la revendication 1, **caractérisé en ce que** le premier facteur dépendant de la masse du train ($k_P$) est défini (S6) sous forme d'une fonction de la valeur de vitesse différentielle ($\Delta V$) et d'une valeur calculée de masse de train ($m_Z$), la valeur de masse de train ($m_Z$) étant calculée (S10) suivant la formule

$$m_Z = \frac{F_{Zist} + m_{Z,alt}}{1 + \dfrac{dV_{ist}}{dt}}$$

et $m_{Z.alt}$ étant une valeur de masse de train calculée préalablement et $F_{Zist}$ une valeur réelle de force de traction.

**7.** Procédé selon la revendication 4, **caractérisé en ce que** le deuxième facteur ($k_D$) dépendant de la masse du train ($k_D$) est défini (S5) sous forme d'une fonction de la valeur de vitesse différentielle ($\Delta V$) et d'une fonction racine d'une valeur calculée de masse de train ($m_Z$), la valeur de masse de train ($m_Z$) étant calculée (S10) suivant la formule

$$m_Z = \frac{F_{Zist} + m_{Z,alt}}{1 + \dfrac{dV_{ist}}{dt}}$$

et $m_{Z.alt}$ étant une valeur de masse de train calculée préalablement et $F_{Zist}$ une valeur réelle de force de traction.

**8.** Procédé selon les revendications 6 et 7, **caractérisé en ce que** la valeur de masse de train ($m_Z$) n'est calculée (S9) que dans le cas d'une valeur réelle de force de traction ($F_{Zist}$) sensiblement supérieure à zéro et dans le cas d'une valeur réelle d'accélération ($a_{ist}$) sensiblement supérieure à zéro et dans le cas d'une valeur de vitesse réelle ($V_{ist}$) sensiblement inférieure à la valeur théorique de vitesse ($V_{soll}$).

**9.** Procédé selon la revendication 8, **caractérisé en ce que** la valeur de masse de train ($m_Z$) est stockée (S11) et est lue (S9, S11) dans le cas d'une valeur réelle de force de traction ($F_{Zist}$) sensiblement inférieure ou égale à zéro et dans le cas d'une valeur réelle d'accélération ($a_{ist}$) sensiblement inférieure ou égale à zéro et dans le cas d'une valeur réelle de vitesse ($V_{ist}$) sensiblement supérieure ou égale à la valeur théorique de vitesse ($V_{soll}$).

**10.** Dispositif de réalisation d'un procédé de régulation de la vitesse d'un véhicule ferroviaire, par lequel, pour constituer une valeur de vitesse différentielle ($\Delta V$), une valeur réelle de vitesse ($V_{ist}$) du véhicule ferroviaire et une valeur théorique prescriptible de vitesse ($V_{soll}$) sont communiquées à un premier sommateur (1), **caractérisé en ce que**, pour constituer une valeur théorique limitée d'accélération ($a_{soll}$), il est prévu un multiplicateur (2) auquel sont reliés un premier limiteur (3), un premier formateur de fonction (13) prévu pour la détermination d'un premier facteur dépendant de la masse du train ($k_p$) et le premier sommateur (1) et qu'il est prévu un intégrateur (6) pour générer une valeur théorique de force de traction ($F_{Zsoll}$).

**11.** Dispositif selon la revendication 10, **caractérisé en ce qu'**il est prévu un deuxième sommateur (4) qui est relié au premier limiteur (3) et à un système de différenciation (15) prévu pour générer une valeur réelle d'accélération ($a_{ist}$) et que le deuxième sommateur (4) est relié à un deuxième limiteur (5), une valeur d'accélération différentielle ($\Delta a$) s'appliquant à la sortie du deuxième limiteur (5).

**12.** Dispositif selon la revendication 11, **caractérisé en ce que** le deuxième limiteur (5) est relié du côté sortie à l'intégrateur (6) qui sert à générer la valeur théorique de force de traction ($F_{Zsoll}$) par intégration de la valeur d'accélération différentielle ($\Delta a$).

**13.** Dispositif selon la revendication 12, **caractérisé en ce qu'**on peut prescrire à l'intégrateur (6), pour l'intégration, une valeur limite supérieure de force de traction ($F_{Zmax}$) et une valeur limite inférieure de force de traction ($F_{Zmin}$).

**14.** Dispositif selon la revendication 12, **caractérisé en ce que** le système de différenciation (15) comporte un différenciateur (7) auquel, pour constituer une valeur réelle différenciée de vitesse ($dV_{ist}$), sont communiquées la valeur réelle de vitesse ($V_{ist}$) et une constante temporelle prescriptible ($T_D$).

**15.** Dispositif selon la revendication 14, **caractérisé en ce que** le système de différenciation (15) comporte un multiplicateur (8) auquel sont communiquées la valeur réelle différenciée de vitesse ($dV_{ist}$) et un facteur d'amplification

$(k_V)$, la valeur réelle d'accélération $(a_{ist})$ s'appliquant à sa sortie.

16. Dispositif selon la revendication 15, **caractérisé en ce que** le système de différenciation (15) présente un deuxième formateur de fonction (9) qui sert à déterminer le facteur d'amplification $(k_V)$ à partir d'un deuxième facteur dépendant du train $(k_D)$ communiqué au deuxième formateur de fonction (9) et de la valeur de vitesse différentielle $(\Delta V)$ communiquée au deuxième formateur de fonction (9) au moyen d'une fonction définie par sections.

17. Dispositif selon la revendication 16, **caractérisé en ce qu'**une unité de calcul de masse du train (10) est prévue pour calculer une valeur de masse de train $(m_Z)$.

18. Dispositif selon la revendication 17, **caractérisé en ce qu'**à l'unité de calcul de masse du train (10) sont communiquées une valeur réelle de vitesse $(V_{ist})$ et une valeur réelle de force de traction $(F_{Zist})$.

19. Dispositif selon la revendication 18, **caractérisé en ce que** l'unité de calcul de masse du train (10) présente un élément de décélération de premier ordre (11) et un élément de retenue (16) qui y est rattaché.

20. Dispositif selon la revendication 17, **caractérisé en ce qu'**au premier formateur de fonction (13) sont communiquées la valeur de vitesse différentielle $(\Delta V)$ et la valeur calculée de masse du train $(m_Z)$.

21. Dispositif selon la revendication 17, **caractérisé en ce qu'**il est prévu un troisième formateur de fonction (12) qui sert à la détermination du deuxième facteur dépendant de la masse du train $(k_D)$ et auquel sont communiquées la valeur de vitesse différentielle $(\Delta V)$ et la valeur calculée de masse du train $(m_Z)$.

22. Dispositif selon une des revendications 11 à 21, **caractérisé en ce que** le dispositif est mis en oeuvre dans au moins un microprocesseur numérique.

Fig. 1

Fig. 2

13

**Fig. 3**

Fig. 4-1

Fig. 4-2

**Fig. 4-3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 144659